# EUROPEAN PATENT APPLICATION

(11) **EP 4 339 331 A2**
(43) Date of publication of application: **20.03.2024**
(21) Application number: 23158241.2
(22) Date of filing: 23.02.2023
(51) Int. Cl.: C25B 1/23, C25B 15/08, C01B 32/00

(54) **SEQUESTRATION SYSTEM**

(30) Priority: 15.09.2022 JP 2022147420
(71) Applicant: KABUSHIKI KAISHA TOSHIBA, Minato-ku Tokyo 105-0023 (JP)
(72) Inventor: KITAGAWA, Ryota, Minato-ku, Tokyo, 105-0023 (JP); FUJIWARA, Naoya, Minato-ku, Tokyo, 105-0023 (JP); KOFUJI, Yusuke, Minato-ku, Tokyo, 105-0023 (JP); ONO, Akihiko, Minato-ku, Tokyo, 105-0023 (JP); MIKOSHIBA, Satoshi, Minato-ku, Tokyo, 105-0023 (JP)
(74) Representative: Hoffmann Eitle

(57) **Abstract**

A sequestration system includes: an electrolysis part having an electrolysis cell having an anode, a cathode, an anode flow path facing on the anode, and a cathode flow path facing on the cathode; and a reaction part configured to switch a first operation and a second operation, the first operation including producing solid carbon using a catalyst from a first raw material containing a first fluid to be introduced from the cathode flow path, and the second operation including performing a reaction of a second raw material containing a second fluid to be introduced from the anode flow path and solid carbon to be deposited on the catalyst to remove at least a part of the deposited solid carbon from the catalyst.

## Description

### FIELD

Arrangements relate to a sequestration system.

### BACKGROUND

In recent years, sequestration technologies of carbon dioxide (CO₂), which is a main greenhouse effect gas, have been developed for global warming countermeasures. Conducted examples of these sequestration technologies include converting carbon dioxide derived from fossil resources and the atmosphere into solid carbon to effectively use the converted solid carbon as materials or to storage the converted solid carbon and thus permanently sequestrate it. In particular, an attempt to store the solid carbon converted from CO₂ derived from the atmosphere is attractive as one of negative emission technologies of reducing CO₂ on the earth.

### RELEVANT REFERENCES

### Patent Reference

Reference 1: Specification of US Patent No. 10479739

### Non-patent Reference

Reference 2: R. D. Green et. al, AIAA 2016-5454, the Internet <URL: https://arc.aiaa.org/doi/10.2514/6.2016-5454>

### BRIEF DESCRIPTION OF THE DRAWINGS

FIG. 1 is a schematic diagram illustrating a configuration example of a sequestration system of a first arrangement.
FIG. 2 is a schematic view illustrating the configuration example of the sequestration system 1 illustrated in FIG. 1.
FIG. 3 is a schematic view illustrating a configuration example of a carbon production reactor 122.
FIG. 4 is a schematic view illustrating a configuration example of a catalyst regeneration reactor 131.
FIG. 5 is a schematic diagram illustrating a configuration example of a sequestration system of a second arrangement.
FIG. 6 is a schematic diagram illustrating a configuration example of a sequestration system of a third arrangement.
FIG. 7 is a schematic view illustrating a configuration example of a reactor 400.
FIG. 8 is a schematic diagram illustrating a configuration example of a sequestration system of a fourth arrangement.
FIG. 9 is a schematic diagram illustrating a configuration example of a sequestration system of a fifth arrangement.
FIG. 10 is a schematic diagram illustrating a configuration example of a sequestration system of a sixth arrangement.
FIG. 11 is a schematic diagram illustrating a configuration example of a sequestration system of a seventh arrangement.
FIG. 12 is a schematic diagram illustrating a configuration example of a sequestration system of an eighth arrangement.
FIG. 13 is a schematic view illustrating a configuration example of a reactor 500.
FIG. 14 is a schematic diagram illustrating another configuration example of the sequestration system of the eighth arrangement.
FIG. 15 is a schematic diagram illustrating the other configuration example of the sequestration system of the eighth arrangement.
FIG. 16 is a schematic diagram illustrating a configuration example of a sequestration system of a ninth arrangement.
FIG. 17 is a schematic diagram illustrating a configuration example of a sequestration system of a tenth arrangement.
FIG. 18 is a schematic diagram illustrating a configuration example of a sequestration system of an eleventh arrangement.
FIG. 19 is a schematic diagram illustrating a configuration example of a sequestration system of a twelfth arrangement.

### DETAILED DESCRIPTION

A sequestration system of an arrangement includes: an electrolysis part having an electrolysis cell comprising an anode, a cathode, an anode flow path facing on the anode, and a cathode flow path facing on the cathode; and a reaction part configured to switch a first operation and a second operation, the first operation including producing solid carbon using a catalyst from a first raw material containing a first fluid to be introduced from the cathode flow path, and the second operation including performing a reaction of a second raw material and solid carbon to be deposited on the catalyst to remove at least a part of the deposited solid carbon from the catalyst, the second raw material containing a second fluid to be introduced from the anode flow path.

Hereinafter, arrangements will be described with reference to the drawings. In the arrangements presented below, substantially the same constituent parts are denoted by the same reference signs, and a description thereof may be partially omitted. The drawings are schematic, and the relation of the thickness and planar dimension, a thickness ratio among the parts, and so on may be different from actual ones.

Incidentally, in this specification, "connect" includes not only direct connection but also indirect connection unless specified.

A technology of converting CO₂ into solid carbon is known as a system in which the development is proceeding with a CO₂ sequestration technology in spacecraft, and a combination of electrolysis and a thermochemical reaction causes a conversion from CO₂ to carbon (C).

For example, hydrogen and oxygen are produced by electrolysis of water (H₂O), and the thermochemical reaction of the obtained H₂ and CO₂ produces methane. Moreover, a method for producing solid carbon by decomposition reaction of the produced methane is known.

Further, a method for producing CO, H₂, and O₂ from water and CO₂ by a solid oxide co-electrolysis cell to produce solid carbon from CO and H₂ is known.

However, the conventional carbon dioxide sequestration systems have problems such as limitation to uses in the spacecraft as use of oxygen and limitation of carbon growth due to deactivation of a carbon production catalyst.

Thus, a sequestration system of an arrangement effectively uses a product such as oxygen produced by an electrolysis cell, thereby achieving continuously high efficiency. Concrete examples of the sequestration system of the arrangement will be hereinafter described.

### (First Arrangement)

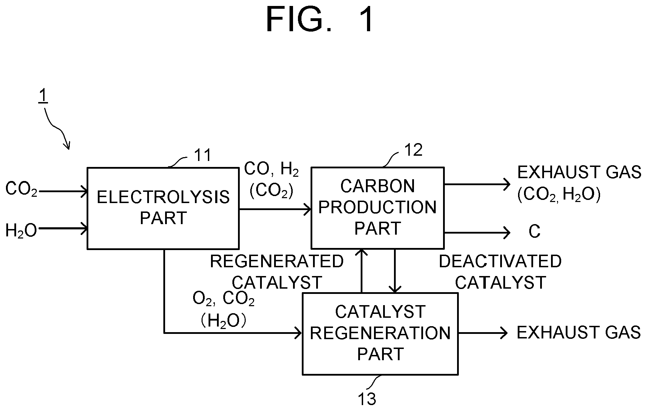

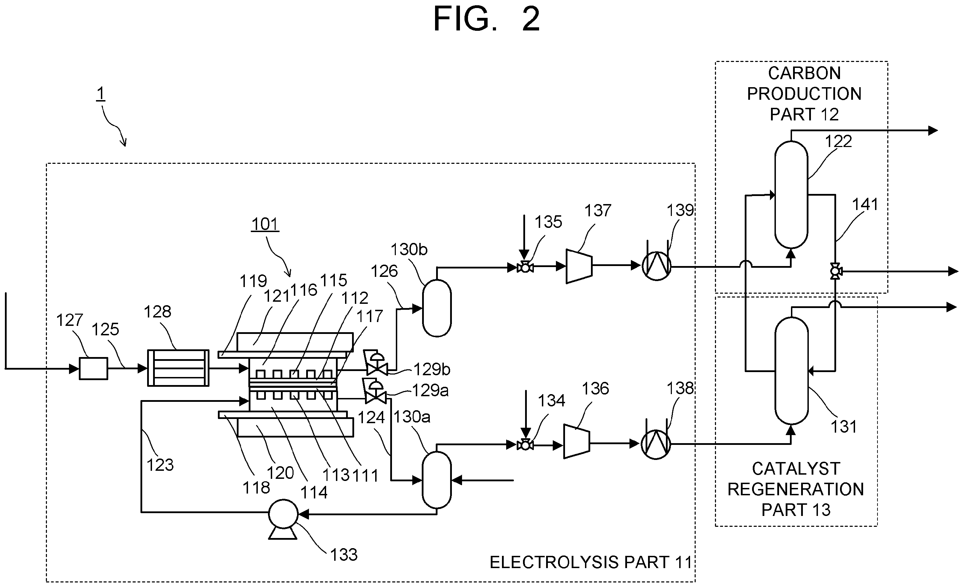

FIG. 1 is a schematic diagram illustrating a configuration example of a sequestration system of a first arrangement. A sequestration system 1 illustrated in FIG. 1 includes an electrolysis part 11, a carbon production part 12, and a catalyst regeneration part 13. Moreover, FIG. 2 is a schematic view illustrating the configuration example of the sequestration system 1 illustrated in FIG. 1.

### [Electrolysis part 11]

The electrolysis part 11 has an electrolysis cell 101, a mass flow controller 127, a humidifier 128, a back pressure regulating valve 129a, a back pressure regulating valve 129b, a gas/liquid separator 130a, a gas/liquid separator 130b, a pump 133, a gas inlet port 134, and a gas inlet port 135, as illustrated in FIG. 2.

The electrolysis cell 101 has an anode 111, a cathode 112, an anode flow path plate 114 in which an anode flow path 113 facing on the anode 111 is formed, a cathode flow path plate 116 in which a cathode flow path 115 facing on the cathode 112 is formed, a diaphragm 117 between the anode 111 and the cathode 112, a current collector plate 118, a current collector plate 119, a clamping plate 120, and a clamping plate 121.

The anode flow path 113 allows an electrolysis solution containing water to flow therethrough while being brought into contact with the anode to be supplied to the anode. The anode flow path plate 114 has an inlet port for introducing the electrolysis solution and a discharge port for discharging an anode solution, a product, and the like, but the illustration of them is omitted. The inlet port of the anode flow path 113 is connected to an anode supply flow path 123 which supplies the anode solution. The discharge port of the anode flow path 113 is connected to an anode discharge flow path 124 which discharges the product produced by an oxidation reaction, such as O₂, and the electrolysis solution.

The cathode flow path 115 allows a cathode gas such as a gas containing CO₂ to flow therethrough while being brought into contact with the cathode 112 to be supplied to the cathode. The cathode flow path plate 116 has an inlet port for introducing the cathode gas and a discharge port for discharging a produced gas and the like, but the illustrations of them is omitted. The inlet port of the cathode flow path 115 is connected to a cathode supply flow path 125 which supplies the cathode gas. The discharge port of the cathode flow path 115 is connected to a cathode discharge flow path 126 which discharges a gas containing a product produced by a reduction reaction.

The anode flow path plate 114 and the cathode flow path plate 116 each have a screw hole for clamping, or the like. Further, in the front and the rear of each of the flow path plates, illustration-omitted packing or the like is inserted when necessary.

The current collector plate 118 is electrically connected to the anode 111. The current collector plate 119 is electrically connected to the cathode 112. The current collector plate 118 and the current collector plate 119 are electrically connected to a power source.

The clamping plate 120 and the clamping plate 121 sandwich and fix the anode 111, the cathode 112, the anode flow path plate 114, the cathode flow path plate 116, the diaphragm 117, the current collector plate 118, and the current collector plate 119. Note that illustration-omitted insulating plates may be sandwiched when necessary between the current collector plate 118 and the clamping plate 120 and between the current collector plate 119 and the clamping plate 121.

The mass flow controller 127 is connected in the middle of the cathode supply flow path 125. The mass flow controller 127 controls a flow rate of the cathode gas to a predetermined flow rate.

The humidifier 128 is provided in the middle of the cathode supply flow path 125 between the mass flow controller 127 and the electrolysis cell 101. The humidifier 128 humidifies the cathode gas. The humidified cathode gas is supplied to the cathode flow path 115 as a raw material of the reduction reaction. This allows the prevention of drying of the diaphragm 117 and precipitation of salt to the cathode flow path 115.

The back pressure regulating valve 129a is connected in the middle of the anode discharge flow path 124 to control a pressure in the anode flow path 113. The back pressure regulating valve 129b is connected in the middle of the cathode discharge flow path 126 to control a pressure in the cathode flow path 115. The back pressure regulating valve 129a and the back pressure regulating valve 129b allow the prevention of damage to the diaphragm 117 due to a pressure difference (differential pressure) between the anode flow path 113 and the cathode flow path 115, for example.

The pressure in the anode flow path 113 and the pressure in the cathode flow path 115 are preferably regulated to a value less than liquefies the cathode gas, and concretely preferably regulated within a range of not less than 0.1 MPa nor more than 6.4 MPa. The pressure of less than 0.1 MPa in the anode flow path 113 and the cathode flow path 115 has the possibility of a decrease in reduction reaction efficiency of CO₂. Further, the pressure of more than 6.4 MPa in the anode flow path 113 and the cathode flow path 115 liquefies CO₂, and has the possibility of the decrease in reduction reaction efficiency of CO₂. The differential pressure between the anode flow path 113 and the cathode flow path 115 is preferably set to 0.5 MPa or less. This allows the prevention of the damage to the diaphragm 117, for example.

The gas/liquid separator 130a is provided in the middle of the anode discharge flow path 124. The gas/liquid separator 130a separates a fluid discharged from the anode flow path 113 into a liquid and a gas. The separated liquid contains an electrolysis solution. The separated gas contains an oxidation product such as oxygen. The separated gas is fed to the catalyst regeneration part 13. The separated liquid is fed from the gas/liquid separator 130a through the pump 133 to the anode supply flow path 123. The electrolysis solution is circulated through the anode supply flow path 123, the anode flow path 113, the anode discharge flow path 124, the gas/liquid separator 130a, and the pump 133. The gas/liquid separator 130a may have an inlet port to allow external supply of the electrolysis solution.

The gas/liquid separator 130b is provided in the middle of the cathode discharge flow path 126. The gas/liquid separator 130b separates a fluid discharged from the cathode flow path 115 into a liquid and a gas. The liquid contains water, for example. The gas contains a gaseous reduction product such as carbon monoxide, for example. The separated reduction product is fed to the carbon production part 12. The separated water may be fed to the gas/liquid separator 130a or the humidifier 128. This allows effective use of the separated water.

The gas inlet port 134 is provided in the middle of the anode discharge flow path 124. The gas inlet port 134 allows additional external introduction of a source gas such as oxygen into the anode discharge flow path 124. The gas inlet port 134 need not necessarily be provided.

The gas inlet port 135 is provided in the middle of the cathode discharge flow path 126. The gas inlet port 135 allows additional external introduction of a source gas such as carbon monoxide or carbon dioxide into the cathode discharge flow path 126. The gas inlet port 135 need not necessarily be provided.

A compressor 136 is provided in the middle of the anode discharge flow path 124. The compressor 136 can regulate a pressure in the anode discharge flow path 124. Regulating the pressure in the anode discharge flow path 124 allows improvement in reaction efficiency in the respective parts. The compressor 136 need not necessarily be provided.

A compressor 137 is provided in the middle of the cathode discharge flow path 126. The compressor 137 can regulate a pressure in the cathode discharge flow path 126. Regulating the pressure in the cathode discharge flow path 126 allows the improvement in reaction efficiency in the respective parts. The compressor 137 need not necessarily be provided.

A temperature regulator 138 is provided in the middle of the anode discharge flow path 124. The temperature regulator 138 can regulate a temperature of the fluid flowing through the anode discharge flow path 124. Regulating the temperature of the fluid flowing through the anode discharge flow path 124 allows the improvement in reaction efficiency in the respective parts. The temperature regulator 138 need not necessarily be provided.

A temperature regulator 139 is provided in the middle of the cathode discharge flow path 126. The temperature regulator 139 can regulate a temperature of the fluid flowing through the cathode discharge flow path 126. Regulating the temperature of the fluid flowing through the cathode discharge flow path 126 allows the improvement in reaction efficiency in the respective parts. The temperature regulator 139 need not necessarily be provided.

In the electrolysis cell 101, supplying electric power to the anode 111 and the cathode 112 causes a conversion from carbon dioxide mainly to carbon monoxide (CO) or hydrocarbon such as methane (CH₄) or ethylene (C₂H₄) in the cathode 112. Further, hydrogen may be produced as a side reaction simultaneously with the conversion of carbon dioxide in the cathode 112. The reaction to produce oxygen from water or water vapor occurs in the anode 111.

As a system of the electrolysis cell 101, for example, an electrolysis cell using the diaphragm 117 having a porous membrane, a solid oxide electrolysis cell, or a solid polymer electrolyte cell can be used. As an operating temperature of the electrolysis cell 101, the electrolysis cell using the porous diaphragm or the solid polymer electrolyte cell is preferably operated in a temperature range of not less than 20°C nor more than 90°C. Further, the solid oxide electrolysis cell is preferably operated in a temperature range of not less than 700°C nor more than 900°C.

The cathode gas such as the gas containing CO₂ is supplied to the cathode 112. In this case, the cathode gas can contain water vapor. The solution containing water or the water vapor is supplied to the anode 111. Further, an aqueous solution containing an electrolyte can also be used. The aqueous solution containing the electrolyte (electrolysis solution) includes an aqueous solution containing, for example, phosphate ions (PO₄²⁻), borate ions (BO₃³⁻), sodium ions (Na⁺), potassium ions (K⁺), calcium ions (Ca²⁺), lithium ions (Li⁺), cesium ions (Cs⁺), magnesium ions (Mg²⁺), chloride ions (Cl⁻), hydrogen carbonate ions (HCO₃⁻), carbonate ions (CO₃²⁻), hydroxide ions (OH⁻), or the like.

The electrolysis cell 101 may be a cell stack in which a plurality of cells are stacked to increase an amount of the produced gas, and moreover, may be constituted of a plurality of cell stacks.

The substances produced by the cathode 112 and the anode 111 in the electrolysis cell 101 and unreacted raw materials are each discharged from the electrolysis part 11. The substance produced by the cathode 112 among them is supplied to the post-stage carbon production part 12.

The sequestration system 1 may have, between the electrolysis part 11 and the carbon production part 12, a gas regulating unit for regulating components in the gases supplied from the electrolysis part 11 to a gas component ratio suitable for a composite condition in the carbon production part 12. Further, the sequestration system 1 may have a temperature regulating unit and a pressure regulating unit to control the gases to a temperature and a pressure suitable for composite conditions in the carbon production part 12.

The gas containing O₂ produced by the anode 111 is supplied to the catalyst regeneration part 13. Note that at the time of electrochemical reaction in the above-described electrolysis cell using the porous membrane or solid polymer electrolyte cell, in which the operation is performed at low temperatures, a part of CO₂ gas supplied to the cathode 112 sometimes moves to the anode 111, so that the fluid discharged from the outlet of the anode flow path 113 (anode exhaust gas) contains CO₂. At this time, CO₂ in the anode exhaust components discharged from the electrolysis part 11 can be separated and recovered to be used as a CO₂ raw material supplied to the CO₂ conversion unit again. In this case, a unit for separation and recovery may be a CO₂ separation and recovery unit, or may be an additional CO₂ separation and recovery unit provided in a post-stage of the CO₂ conversion unit.

The sequestration system 1 may have, between the electrolysis part 11 and the catalyst regeneration part 13, a gas regulating unit for regulating the components in the gases supplied from the electrolysis part 11 to a gas component ratio suitable for reaction conditions in the catalyst regeneration part 13. Further, the sequestration system 1 may be provided with a temperature regulating unit and a pressure regulating unit to control the gases to a temperature and a pressure suitable for a catalyst regeneration reaction.

The electric power supplied from the power source to the electrolysis cell 101 may be electric power from an ordinary commercial power source, a battery, or the like, or may be electric power supplied by converting renewable energy into electric energy. As examples of such electric power, there can be cited power source obtained by converting kinetic energy or potential energy such as wind power, water power, geothermal power or tidal power into electric energy, electric power produced from a solar cell having a photoelectric conversion element which converts light energy into electric energy, electric power produced from a fuel cell, a storage battery, or the like which converts chemical energy into electric energy, and electric power obtained from a device which converts vibrational energy such as sound into electric energy.

CO₂ supplied to the cathode flow path 115 is not particularly limited, and for example, CO₂ separated and recovered from a CO₂ discharge source and the atmosphere can be cited. As the CO₂ discharge source, for example, power generation facilities such as a thermal power plant or a biomass power plant, or industrial facilities such as a steel plant, a cement plant, chemical plant, or an incineration plant can be cited. Note that in the case of using CO₂ derived from biomass and derived from the atmosphere as a raw material, formation of a system of sequestrating CO₂ on the earth enables carbon negative, which enables high environmental value. A CO₂ concentration of the CO₂ containing gas supplied to the cathode 112 is not particularly limited, and preferably more than 50% to 100% or less, and further preferably not less than 90% nor more than 100%. A higher concentration of the CO₂ gas allows a further improvement in energy efficiency of the post-stage units and a further reduction in unit size.

### [Carbon production part 12]

The carbon production part 12 produces solid carbon from a raw material containing at least a part of the fluid supplied from the outlet of the cathode flow path 115. The carbon production part 12 has a carbon production reactor 122, for example, as illustrated in FIG. 2.

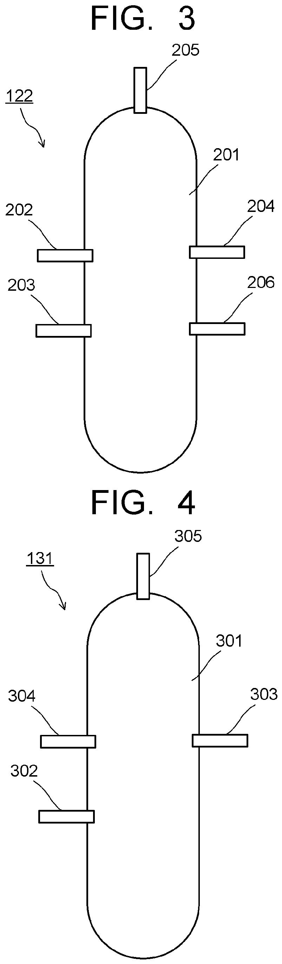

FIG. 3 is a schematic view illustrating a configuration example of the carbon production reactor 122. The carbon production reactor 122 has a processing chamber 201, an inlet port 202, an inlet port 203, an outlet port 204, and an outlet port 205.

The carbon production reactor 122 has a catalyst for accelerating a carbon production reaction inside the processing chamber 201. The catalyst is removable from the processing chamber 201. As examples of the catalyst, carbon particles, metal particles, and the like can be cited. The catalyst of metal particles or the like may be supported on, for example, an inorganic material or a carbon material to be disposed inside the processing chamber 201. As the kind of metal particles, a transition metal such as, for example, iron, nickel, cobalt, palladium, or copper may be used, or an alloy of any of them may be used. Further, a metallic compound in which the transition metal and carbon, nitrogen, or the like form a compound may be used, or a metal oxide in which the transition metal and alumina, silica, or the like are compounded may be used. The catalyst disposed inside the processing chamber 201 may have a powder body. The catalyst may be molded into a molded product such as a pellet to be disposed inside the processing chamber 201. The catalyst may be supported on a base material or the like to be disposed inside the processing chamber 201. A shape of the base material is not particularly limited, but, for example, a plate shape or a mesh shape.

The inlet port 202 is connected to the cathode discharge flow path 126. The fluid flowing through the cathode discharge flow path 126 is introduced through the inlet port 202 to the processing chamber 201. The inlet port 202 is formed by connecting a pipe to the processing chamber 201, for example.

The inlet port 203 is connected to the catalyst regeneration part 13. The inlet port 203 is formed by connecting a pipe to the processing chamber 201, for example.

The outlet port 204 is connected to the catalyst regeneration part 13. The catalyst disposed in the processing chamber 201 is carried out of the carbon production reactor 122 through the outlet port 204. The outlet port 204 is formed by connecting a pipe to the processing chamber 201, for example.

The outlet port 205 is provided at the top of the processing chamber 201, for example. The gas discharged from the carbon production reactor 122 is discharged through the outlet port 205 from the carbon production reactor 122. The outlet port 205 is formed by connecting a pipe to the processing chamber 201, for example.

The outlet port 206 is connected to the processing chamber 201. The solid carbon produced by the processing chamber 201 is discharged through the outlet port 206 from the processing chamber 201. The outlet port 206 is formed by connecting a pipe to the processing chamber 201, for example.

The fluid containing the cathode product is introduced through the inlet port 202 to the carbon production reactor 122. The carbon production reactor 122 uses the introduced fluid as the raw material to produce the solid carbon by at least one reaction of the following reaction formulas (1), (2), (3). ΔH⁰₂₉₈ represents the heat of reaction in a standard state.

2CO → C + CO₂ (ΔH⁰₂₉₈ = -172 kJ/mol) (1)

CO + H₂ → C + H₂O (ΔH⁰₂₉₈ = -131 kJ/mol) (2)

CO₂ + 2H₂ → C + 2H₂O (ΔH⁰₂₉₈ = -90 kJ/mol) (3)

In a case where the fluid discharged from the outlet of the cathode flow path 115 contains hydrocarbon such as methane or ethylene, the carbon production reactor 122 produces solid carbon by either of the reactions of the following reaction formulas (4) and (5).

CH₄ → C + 2H₂ (4)

C₂H₄ → 2C + 2H₂ (5)

As examples of the produced solid carbon, graphite, graphene, carbon black, fibrous carbon, buckminsterfullerene, single-layer carbon nanotube, or multilayer carbon nanotube can be cited.

For operating conditions suitable for the above-described reactions, the carbon production part 12 regulates a temperature and a pressure in the carbon production reactor 122. Alternatively, the reactions can be accelerated by irradiating the interior of the processing chamber 201 with plasma.

When the carbon production reaction is carried out by using the catalyst, the solid carbon grows on a surface of the catalyst. In this growth process, the solid carbon coats the catalyst, which delays the carbon production reaction to deactivate the catalyst.

Thus, the sequestration system 1 of this arrangement regenerates the deactivated catalyst by using the catalyst regeneration part 13. The deactivated catalyst can be carried between the carbon production part 12 and the catalyst regeneration part 13 by using, for example, a not-illustrated carrier device such as a carrier robot.

The catalyst disposed in the processing chamber 201 is recovered by the catalyst regeneration part 13 through the outlet port 204 provided through the carbon production reactor 122 in a stage in which a desired carbon production reaction has progressed. The carbon production reactor 122 may have an injection port capable of replenishing the catalyst. The regenerated catalyst is carried into the carbon production reactor 122 through the inlet port 203.

The carbon production part 12 discharges an off gas caused by the carbon production reaction and an unreacted source gas from the outlet port 205 provided at the top of the carbon production reactor 122 outside the system.

### [Catalyst regeneration part 13]

The catalyst regeneration part 13 has a catalyst regeneration reactor 131 as illustrated in FIG. 2, for example.

FIG. 4 is a schematic view illustrating a configuration example of the catalyst regeneration reactor 131. The catalyst regeneration reactor 131 has a processing chamber 301, an inlet port 302, an inlet port 303, an outlet port 304, and an outlet port 305.

The catalyst regeneration reactor 131 is capable of disposing the deactivated catalyst inside the processing chamber 301. The deactivated catalyst is removable from the processing chamber 301.

The inlet port 302 is connected to the anode discharge flow path 124. The fluid flowing through the anode discharge flow path 124 is introduced through the inlet port 302 to the processing chamber 301. The inlet port 302 is formed by connecting a pipe to the processing chamber 301, for example.

The inlet port 303 is connected to the outlet port 204 of the carbon production reactor 122. The deactivated catalyst is introduced from the carbon production reactor 122 through the inlet port 303 to the processing chamber 301. The inlet port 303 is formed by connecting a pipe to the processing chamber 301, for example.

The outlet port 304 is connected to the inlet port 203 of the carbon production reactor 122. The catalyst regenerated in the processing chamber 301 is carried into the processing chamber 201 of the carbon production reactor 122 through the outlet port 304. The outlet port 304 is formed by connecting a pipe to the processing chamber 301, for example.

The outlet port 305 is provided at the top of the processing chamber 301. The gas discharged from the catalyst regeneration reactor 131 is discharged through the outlet port 305 from the catalyst regeneration reactor 131. The outlet port 305 is formed by connecting a pipe to the processing chamber 301, for example.

The sequestration system 1 has a path 141 capable of carrying the catalyst between the carbon production reactor 122 and the catalyst regeneration reactor 131. The catalyst is carried between the respective reactors through the path 141. The number of the paths 141 may be two as illustrated in FIG. 2, or may be one.

The fluid containing the anode product is introduced through the inlet port 302 to the catalyst regeneration reactor 131. In the catalyst regeneration reactor 131, the deactivated catalyst introduced from the carbon production reactor 122 is disposed to undergo the catalyst regeneration reaction by using the introduced fluid as a raw material. In the catalyst regeneration reactor 131, by using at least a part of the fluid introduced from the outlet of the anode flow path 113 through the inlet port 302, the deactivated catalyst carried from the carbon production part 12 undergoes regeneration processing by a thermochemical reaction. In the catalyst regeneration reactor 131, at least one of reactions of the following reaction formulas (6), (7), (8), (9) is carried out to remove at least a part of the carbon coating the catalyst. ΔH⁰₂₉₈ represents the heat of reaction in the standard state.

C + O₂ → CO₂ (ΔH⁰₂₉₈ = -393.78 kJ/mol) (6)

2C + O₂ → 2CO (ΔH⁰₂₉₈ = -221.0 kJ/mol) (7)

C + CO₂ → 2CO (ΔH⁰₂₉₈ = +172.58 kJ/mol) (8)

C + H₂O → CO + H₂ (ΔH⁰₂₉₈ = +131.39 kJ/mol) (9)

For operating conditions suitable for the above-described reactions, the catalyst regeneration part 13 can regulate a temperature and a pressure in the catalyst regeneration reactor 131.

The catalyst regeneration part 13 discharges an off gas caused by the catalyst regeneration reaction from the outlet port 305 provided at the top of the catalyst regeneration reactor 131 outside the system. The regenerated catalyst formed by regenerating the deactivated catalyst is fed through the path 141 to the carbon production reactor 122.

After carrying out a predetermined carbon production reaction, the solid carbon containing the catalyst is discharged outside the system. A discharge path is not particularly limited, and may be provided in the path 141, or the solid carbon containing the catalyst may be discharged from the carbon production reactor 122 or the catalyst regeneration reactor 131.

As described above, according to the first arrangement, the carbon-coated catalyst deactivated by the carbon production reaction undergoes the regeneration processing in the catalyst regeneration part 13 by using the anode gas in the electrolysis cell 101 or a water electrolysis cell, which allows long-term operation of the carbon production reaction having continuously high efficiency. Further, the source gas of O₂, H₂O, and CO₂ used for the catalyst regeneration part 13 does not require additional preparation such as recovery from the atmosphere, and the anode gas in the electrolysis cell can be used effectively in the system without being exhausted to the atmosphere, which allows efficient operation.

### (Second Arrangement)

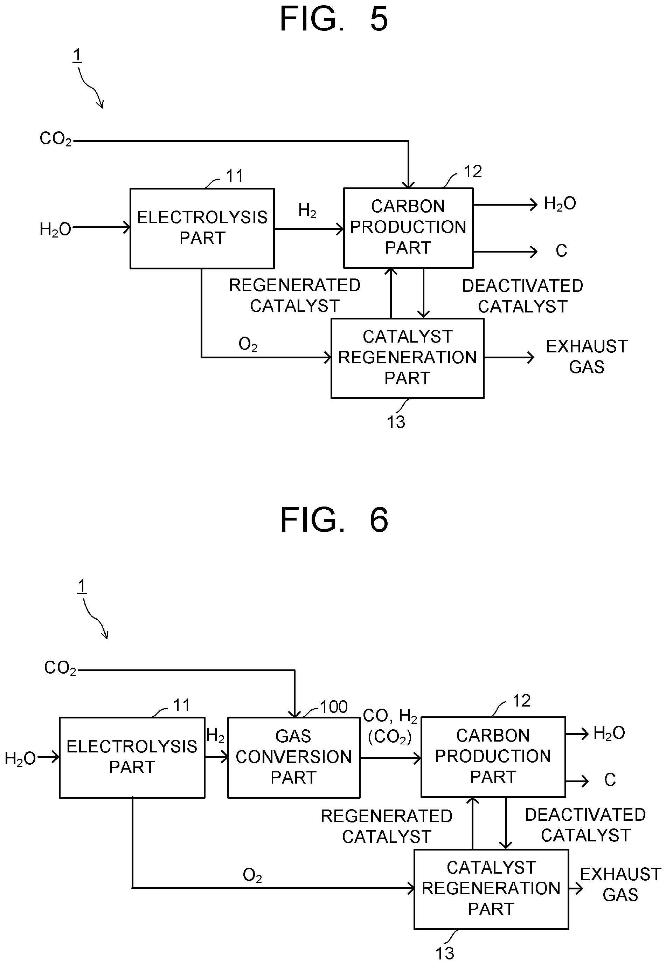

FIG. 5 is a schematic diagram illustrating a configuration example of a sequestration system of a second arrangement. The sequestration system illustrated in FIG. 5 includes an electrolysis part 11, a carbon production part 12, and a catalyst regeneration part 13. Hereinafter, a part different from that of the first arrangement will be described, and for the other parts, the description of the first arrangement can be referred to as required.

### [Electrolysis part 11]

The electrolysis part 11 has a water electrolysis cell. The water electrolysis cell has, similarly to the electrolysis cell 101, an anode 111, a cathode 112, an anode flow path plate 114 in which an anode flow path 113 facing on the anode 111 is formed, a cathode flow path plate 116 in which a cathode flow path 115 facing on the cathode 112 is formed, a diaphragm 117 between the anode 111 and the cathode 112, a current collector plate 118, a current collector plate 119, a clamping plate 120, and a clamping plate 121.

In the water electrolysis cell, supplying electric power to the anode 111 and the cathode 112 causes, by using water as a raw material, reactions of producing hydrogen in the cathode 112 and producing oxygen in the anode 111. As a system of the water electrolysis cell, alkaline water electrolysis, solid polymer water electrolysis, solid oxide water electrolysis, or the like can be used. The water electrolysis cell may be a cell stack in which a plurality of cells are stacked to increase an amount of a produced gas, and moreover, may be in the form of having a plurality of cell stacks.

Gases produced by the cathode 112 and the anode 111 are each discharged from the electrolysis part 11. The substance of them, produced by the cathode 112, is supplied to the carbon production part 12. Between the electrolysis part 11 and the carbon production part 12, a water removal unit for regulating the water content in the gas supplied from the electrolysis part 11 can be provided. Further, between the electrolysis part 11 and the carbon production part 12, a temperature regulating unit and a pressure regulating unit may be provided to control the gas to a temperature and a pressure suitable for composite conditions in the carbon production part 12. The gas containing oxygen produced by the anode 111 is supplied to the catalyst regeneration part 13. Between the electrolysis part 11 and the catalyst regeneration part 13, a water removal unit for regulating the water content in the gas supplied from the electrolysis part 11, and, a temperature regulating unit and a pressure regulating unit for controlling the gas to a temperature and a pressure suitable for a catalyst regeneration reaction may be provided.

### [Carbon production part 12]

The carbon production part 12 has a carbon production reactor 122, as illustrated in FIG. 3. The carbon production reactor 122 produces solid carbon by the reaction of the above-described formula (2) by using at least a part of the gas introduced from an outlet of the cathode flow path 115 and a gas containing carbon dioxide. For operating conditions suitable for the reaction of the above-described formula (2), a temperature and a pressure in the carbon production reactor can be regulated.

### [Catalyst regeneration part 13]

The catalyst regeneration part 13 has a catalyst regeneration reactor 131 as illustrated in FIG. 2, for example. In the catalyst regeneration reactor 131, by using at least a part of the gas introduced from an outlet of the anode flow path 113, a deactivated catalyst carried from the carbon production part 12 undergoes regeneration processing by a thermochemical reaction. At least one of reactions of the above-described formulas (6), (7), (9) occurs in the catalyst regeneration reactor 131, thereby removing at least a part of carbon coating the catalyst. For operating conditions suitable for the reaction, a temperature and a pressure in the catalyst regeneration reactor 131 can be regulated.

According to the second arrangement, the carbon-coated catalyst deactivated by the carbon production reaction undergoes the regeneration processing in the catalyst regeneration part 13 by using the fluid discharged from the water electrolysis cell, which allows long-term operation of the carbon production reaction having continuously high efficiency. Further, the source gas of O₂ and H₂O used for the catalyst regeneration part 13 does not require additional preparation through recovery from the atmosphere, and the fluid discharged from the water electrolysis cell can be used effectively in the system without being exhausted to the atmosphere, which allows efficient operation.

### (Third Arrangement)

FIG. 6 is a schematic diagram illustrating a configuration example of a sequestration system of a third arrangement. The sequestration system illustrated in FIG. 6 includes an electrolysis part 11, a gas conversion part 100, a carbon production part 12, and a catalyst regeneration part 13. Hereinafter, a part different from that of the first arrangement will be described, and for the other parts, the description of the first arrangement can be referred to as required.

### [Gas conversion part 100]

The gas conversion part 100 has a reactor which converts gas.

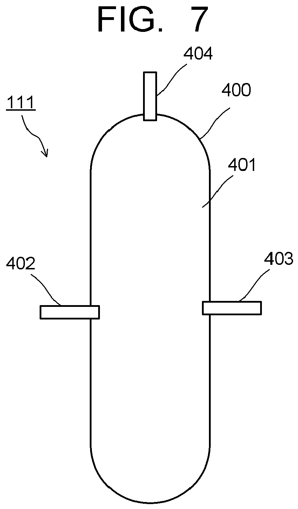

FIG. 7 is a schematic view illustrating a configuration example of the reactor of the gas conversion part 100. A reactor 400 has a processing chamber 401, an inlet port 402, and an outlet port 403.

The reactor 400 is capable of disposing a catalyst inside the processing chamber 401.

The inlet port 402 is connected to a cathode flow path 115. A fluid discharged from the cathode flow path 115 is introduced through the inlet port 402 to the processing chamber 401. The inlet port 402 is formed by connecting a pipe to the processing chamber 401, for example.

The outlet port 403 is connected to the carbon production part 12. A fluid discharged from the processing chamber 401 is introduced through the outlet port 403 to the carbon production part 12. The reactor 400 is connected to a carbon dioxide supply source. A gas containing carbon dioxide supplied from the carbon dioxide supply source is introduced through an inlet port 404 to the processing chamber 401, for example. The outlet port 403 is formed by connecting a pipe to the processing chamber 401, for example.

In the reactor 400, by using a cathode gas introduced from the electrolysis part 11 and the gas containing carbon dioxide supplied from the carbon dioxide supply source through the inlet port 404 provided through the reactor 400, a reverse shift reaction represented by the following formula (10) is carried out by using supplied thermal energy.

CO₂ + H₂ → CO + H₂O (10)

The reactor 400 has a catalyst, sealed in the processing chamber 401, which causes an efficient reaction of the above-described formula (10), and the reaction of the above-described formula (10) occurs therein at a predetermined temperature and a predetermined pressure. The temperature in the processing chamber 401 is preferably not less than 600°C nor more than 1000°C, and the pressure in the processing chamber 401 is preferably not less than one atmosphere nor more than ten atmospheres.

The produced gas discharged from the reactor 400 and the unreacted raw material are supplied to the carbon production part 12. Note that between the gas conversion part 100 and the carbon production part 12, devices capable of temperature regulation, pressure control, water removal, and the like may be installed for efficient progress of the carbon production reaction.

According to the third arrangement, the carbon-coated catalyst deactivated by the carbon production reaction undergoes regeneration processing in the catalyst regeneration part 13 by using the fluid discharged from the electrolysis part 11, which allows long-term operation of the carbon production reaction having continuously high efficiency. Further, the source gas of O₂ and H₂O used for the catalyst regeneration part 13 does not require additional preparation such as recovery from the atmosphere, and the fluid discharged from the electrolysis part 11 can be used effectively in the system without being exhausted to the atmosphere, which allows efficient operation.

Hereinafter, examples of causing the conversion into CO in electrolysis cells 101, for convenience as the first arrangement, mentioned in descriptions of fourth to twelfth arrangements will be described.

### (Fourth Arrangement)

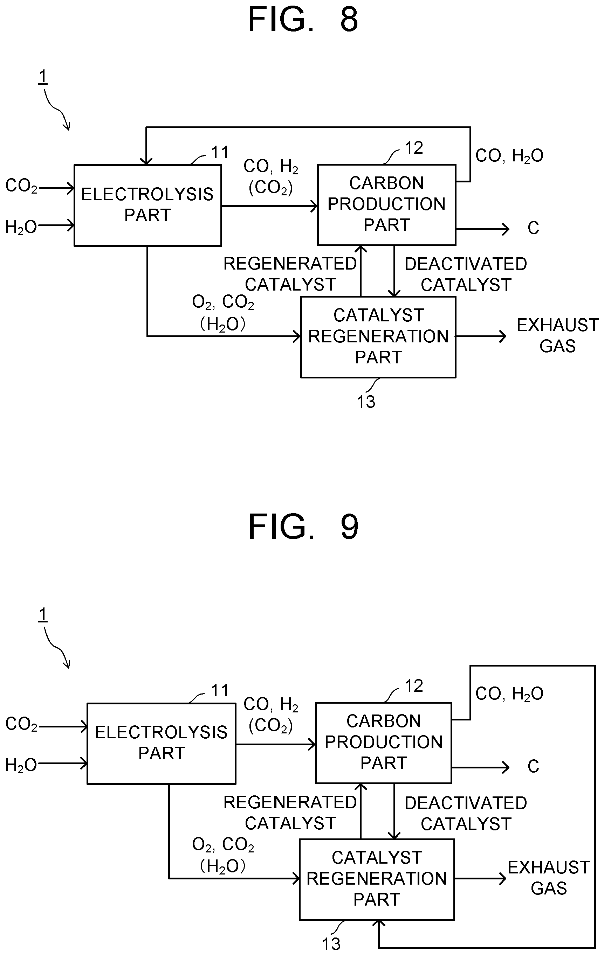

FIG. 8 is a schematic diagram illustrating a configuration example of a sequestration system of the fourth arrangement. The sequestration system illustrated in FIG. 8 is different in that substances discharged from a carbon production part 12 are supplied to an electrolysis part 11 as compared with the configuration example of the sequestration system of the first arrangement. The carbon production part 12 is connected to the electrolysis part 11 by connecting, for example, an outlet port 205 illustrated in FIG. 3 through a pipe to an anode flow path 113 and a cathode flow path 115 of the electrolysis part 11. Further, an outlet port different from the outlet port 205 may be provided through a carbon production reactor 122 to be connected to the anode flow path 113 and the cathode flow path 115. The sequestration system illustrated in FIG. 8 may have equipment for separating and recovering a specific substance or a purge valve between the carbon production part 12 and the electrolysis part 11. Hereinafter, a part different from that of the first arrangement will be described, and for the other parts, the description of the first arrangement can be referred to as required.

The substances discharged from the carbon production part 12 contain CO₂ and H₂O which are by-products of the reactions represented by the above-described formulas (1), (2) and unreacted raw materials (CO and H₂). In the fourth arrangement, the exhaust emissions or CO₂ and H₂O separated and recovered from the exhaust emissions can be supplied to the anode flow path 113 and the cathode flow path 115 of the electrolysis part 11 to be reused.

### (Fifth Arrangement)

FIG. 9 is a schematic diagram illustrating a configuration example of a sequestration system of the fifth arrangement. The sequestration system illustrated in FIG. 9 is different in that substances discharged from a carbon production part 12 are supplied to a catalyst regeneration part 13 as compared with the configuration example of the sequestration system of the first arrangement. The carbon production part 12 is connected to the catalyst regeneration part 13 by connecting, for example, an outlet port 205 of a carbon production reactor 122 illustrated in FIG. 3 through a pipe to an inlet port 302 of a catalyst regeneration reactor 131 illustrated in FIG. 4. Further, an inlet port different from the inlet port 302 may be provided through the catalyst regeneration reactor 131 to be connected to the outlet port 205 of the carbon production reactor 122. The sequestration system illustrated in FIG. 9 may have equipment for separating and recovering a specific substance or a purge valve between the carbon production part 12 and the catalyst regeneration part 13. Hereinafter, a part different from that of the first arrangement will be described, and for the other parts, the description of the first arrangement can be referred to as required.

The substances discharged from the carbon production part 12 contain CO₂ and H₂O which are by-products of the reactions represented by the above-described formulas (1), (2) and unreacted raw materials (CO and H₂). In the fifth arrangement, the exhaust emissions of the carbon production part 12 or CO₂ and H₂O separated and recovered from the exhaust emissions can be supplied to the catalyst regeneration part 13 to be reused.

### (Sixth Arrangement)

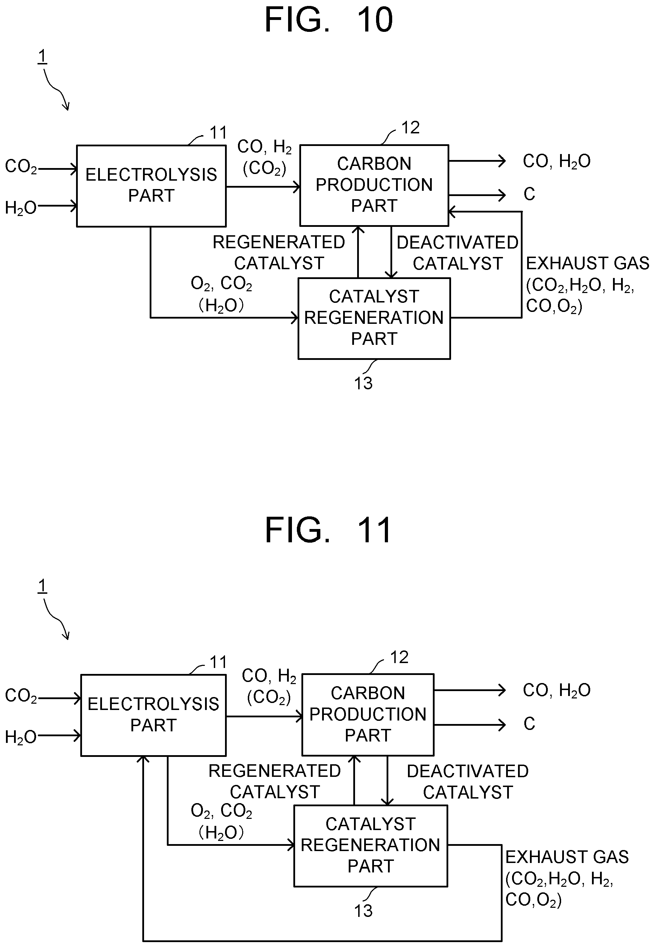

FIG. 10 is a schematic diagram illustrating a configuration example of a sequestration system of the sixth arrangement. The sequestration system illustrated in FIG. 10 is different in that substances discharged from a catalyst regeneration part 13 are supplied to a carbon production part 12 as compared with the configuration example of the sequestration system of the first arrangement. The catalyst regeneration part 13 is connected to the carbon production part 12 by connecting, for example, an outlet port 305 of a catalyst regeneration reactor 131 illustrated in FIG. 4 to an inlet port 202 of a carbon production reactor 122 illustrated in FIG. 3. Further, an outlet port different from the outlet port 305 may be provided through the catalyst regeneration reactor 131 to be connected to the inlet port 202 of the carbon production reactor 122. The sequestration system illustrated in FIG. 10 may have equipment for separating and recovering a specific substance in a fluid discharged from the catalyst regeneration part 13 or a purge valve for exhausting a part of the fluid outside the system between the carbon production part 12 and the catalyst regeneration part 13. Hereinafter, a part different from that of the first arrangement will be described, and for the other parts, the description of the first arrangement can be referred to as required.

The substances exhausted from the catalyst regeneration part 13 contain CO, H₂, and CO₂ which are by-products of the reactions represented by the formulas (6), (7), (8), (9) and unreacted raw materials (O₂, CO₂, H₂O). In the sixth arrangement, the exhaust emissions of the catalyst regeneration part 13 or components separated and recovered from the exhaust emissions can be supplied to the carbon production part 12 to be reused.

### (Seventh Arrangement)

FIG. 11 is a schematic diagram illustrating a configuration example of a sequestration system of the seventh arrangement. The sequestration system illustrated in FIG. 11 is different in that substances discharged from a catalyst regeneration part 13 are supplied to an electrolysis part 11 as compared with the configuration example of the sequestration system of the first arrangement. The catalyst regeneration part 13 is connected to the electrolysis part 11 by connecting, for example, an outlet port 303 illustrated in FIG. 4 to an anode flow path 113 and a cathode flow path 115 of the electrolysis part 11. The sequestration system illustrated in FIG. 11 may have equipment for separating and recovering a specific substance in a fluid discharged from the catalyst regeneration part 13 or a purge valve for exhausting a part of the fluid outside the system between the electrolysis part 11 and the catalyst regeneration part 13. Hereinafter, a part different from that of the first arrangement will be described, and for the other parts, the description of the first arrangement can be referred to as required.

The substances exhausted from the catalyst regeneration part 13 contain CO, H₂, and CO₂ which are by-products of the reactions represented by the formulas (6), (7), (8), (9) and unreacted raw materials (O₂, CO₂, H₂O). In the seventh arrangement, the exhaust emissions of the catalyst regeneration part 13 or components separated and recovered from the exhaust emissions can be supplied to the electrolysis part 11 to be reused.

The sequestration systems of the fourth to seventh arrangements can each enhance the availability of raw materials by recycling the substances discharged from the carbon production part 12 or the catalyst regeneration part 13 in the system. This allows a reduction in raw material cost to enable providing of the sequestration systems excellent in economic efficiency.

### (Eighth Arrangement)

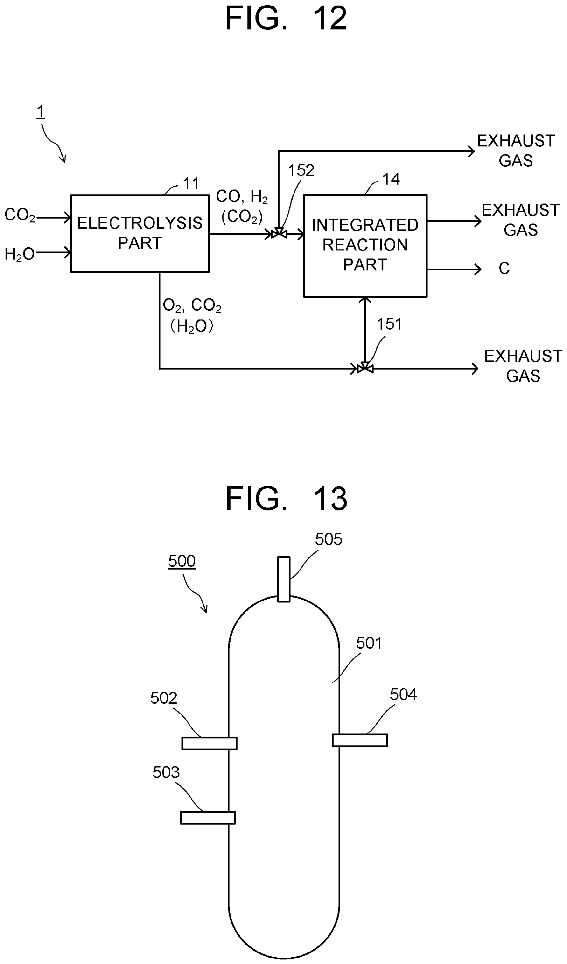

FIG. 12 is a schematic diagram illustrating a configuration example of a sequestration system of the eighth arrangement. The sequestration system illustrated in FIG. 12 includes an electrolysis part 11, an integrated reaction part 14 integrally having a carbon production part 12 and a catalyst regeneration part 13, a switching valve 151, and a switching valve 152. Hereinafter, a part different from that of the first arrangement will be described, and for the other parts, the description of the first arrangement can be referred to as required.

The integrated reaction part 14 has a reactor which switches carbon production operation and catalyst regeneration operation.

FIG. 13 is a schematic view illustrating a configuration example of the reactor. A reactor 500 illustrated in FIG. 13 has a processing chamber 501, an inlet port 502, an inlet port 503, an outlet port 504, and an outlet port 505.

The reactor 500 is capable of disposing a catalyst inside the processing chamber 501.

The inlet port 502 is connected to a cathode discharge flow path 126. A fluid flowing through the cathode discharge flow path 126 is introduced through the inlet port 502 to the processing chamber 501. The inlet port 502 is formed by connecting a pipe to the processing chamber 501, for example.

The inlet port 503 is connected to an anode discharge flow path 124. A fluid flowing through the anode discharge flow path 124 is introduced through the inlet port 503 to the processing chamber 501. The inlet port 503 is formed by connecting a pipe to the processing chamber 501, for example.

The outlet port 504 is connected to the processing chamber 501. Solid carbon produced by the processing chamber 501 is discharged through the outlet port 504 from the processing chamber 501. The outlet port 504 is formed by connecting a pipe to the processing chamber 501, for example.

The outlet port 505 is provided at the top of the processing chamber 501, for example. A gas discharged from the reactor 500 is discharged through the outlet port 505 from the reactor 500. The outlet port 505 is formed by connecting a pipe to the processing chamber 501, for example.

The switching valve 151 connects the anode discharge flow path 124 of the electrolysis part 11 and the inlet port 503 of the reactor 500.

The switching valve 152 connects the cathode discharge flow path 126 of the electrolysis part 11 and the inlet port 502 of the reactor 500.

Hereinafter, the operation of the sequestration system of the eighth arrangement will be described.

First, the fluid flowing through the cathode discharge flow path 126 of the electrolysis part 11 is introduced through the switching valve 152 to the reactor 500 of the integrated reaction part 14. The reactor 500 is regulated to predetermined operating conditions, thereby carrying out a carbon production reaction similar to that in the first arrangement. In this case, the fluid flowing through the anode discharge flow path 124 of the electrolysis part 11 is discharged through the switching valve 151 outside the system.

The carbon production reaction deposits the solid carbon on the catalyst in the reactor 500, and the solid carbon coats the catalyst as the reaction progresses, and deactivates the catalyst, thereby delaying the carbon production reaction. In this case, the operation of the switching valve 152 discharges the fluid flowing through the cathode discharge flow path 126 outside the system to end the carbon production reaction. Next, the operation of the switching valve 151 introduces the fluid flowing through the anode discharge flow path 124 into the reactor 500. The reactor 500 is regulated to predetermined operating conditions, thereby carrying out a catalyst regeneration reaction similarly to that in the first arrangement. This allows regeneration and activation of the deactivated catalyst.

After regeneration processing for a predetermined time, the operation of the switching valve 151 discharges the fluid discharged from the anode discharge flow path 124 outside the system, and by introducing the fluid discharged from the cathode discharge flow path 126 into the reactor 500 again, the carbon production reaction is carried out again. Repeating the carbon production reaction operation and the catalyst regeneration reaction operation by alternate switching between them in this manner causes alternate progress of the carbon production and the catalyst regeneration in the reactor 500, resulting in enabling continuous carbon sequestration. At the time of finally obtaining desired solid carbon, the solid carbon containing the catalyst is discharged from the reactor 500.

The operation of the switching valve 151 and the switching valve 152 requires checking the progress of the carbon production reaction and the catalyst regeneration reaction. In this case, the progress can be checked by measuring a concentration of a specific component in the fluid discharged from the integrated reaction part 14. The fluid discharged from the integrated reaction part 14 contains, for example, CO, H₂, CO₂, and H₂O which are by-products of the carbon production reaction and the catalyst regeneration reaction, and unreacted raw materials (O₂, CO₂, H₂O).

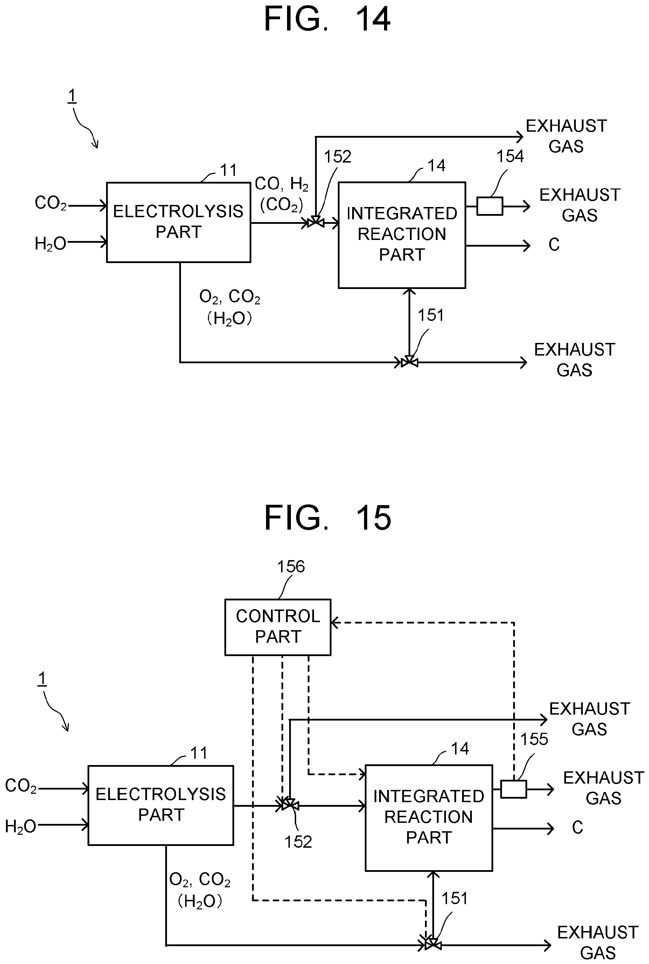

FIG. 14 is a schematic diagram illustrating another configuration example of the sequestration system of the eighth arrangement. The sequestration system illustrated in FIG. 14 is different in terms of having a measuring part 154 as compared with the sequestration system illustrated in FIG. 12.

The measuring part 154 has, for example, a gas concentration meter. In a case where the carbon production reaction causes the reaction represented by, for example, the above-described formula (1), the gas concentration meter capable of measuring a concentration of CO which is a raw material or CO₂ of a by-product is connected to the outlet port 505 of the reactor 500 to continuously monitor a gas concentration at the outlet port 505. The delay of the carbon production reaction causes an increase in CO concentration or a decrease in CO₂ concentration, and thus the gas concentration meter can determine, based on a time-lapse variation of the gas concentration, a time during which the carbon production reaction is delayed. Similarly, in a case where the catalyst regeneration reaction causes the reaction represented by, for example, the above-described formula (6), the gas concentration meter can determine an end time of the catalyst regeneration reaction based on a time-lapse variation of the gas concentration of Oz of a raw material or CO₂ of a by-product.

As the measuring instrument, other than the gas concentration meter, using a weight meter also allows the checking of the progress of the carbon production reaction and the catalyst regeneration reaction. The weight meter is installed to measure a weight of the reactor 500, and monitors, with time, a degree of a weight variation of the reactor 500 due to the carbon production reaction and a degree of a weight variation of the reactor 500 due to the catalyst regeneration reaction, thereby allowing the determination of the end time of the carbon production reaction and the end time of the catalyst regeneration reaction.

Note that the mode of checking the progress of the carbon production reaction and the catalyst regeneration reaction by using the above-described gas concentration meter and weight meter is not limited to the eighth arrangement, and is applicable to the other arrangements.

Moreover, the measuring part 154 such as the above-described gas concentration meter and weight meter is used as a reaction detection part, and using a control part which instructs the determination of the reaction end time based on a signal from the reaction detection part and the operation of the switching valve 151, the switching valve 152, and the reactor 500, and regulating units provided in the respective switching valve 151, switching valve 152, and reactor 500 allows changes in operation of the switching valve 151 and the switching valve 152 and in operating conditions, which enables automation of the system.

FIG. 15 is a schematic diagram illustrating the other configuration example of the sequestration system of the eighth arrangement. The sequestration system illustrated in FIG. 15 is different in terms of having a reaction detection part 155 and a control part 156 as compared with the sequestration system illustrated in FIG. 13.

The reaction detection part 155 detects a gas concentration at the outlet port 503 of the reactor 500 and a weight of the reactor 500 to generate a data signal as a detection signal and transmit the data signal to the control part. A transmission method of the data signal may be a wired system or a wireless system.

The control part 156 is connected to the reaction detection part 155, and the regulating units provided in the respective switching valve 151, switching valve 152, and reactor 500. The control part 156 beforehand stores request criteria of the data signal indicating the gas concentration at the outlet port 503 and the weight of the reactor 500, and, in a case of meeting the request criteria, outputs a control signal to the regulating units. The control part 156 is configured by hardware such as, for example, a personal computer (PC) or a microcomputer (micon) which includes programs and simulation software.

The respective switching valve 151, switching valve 152, and reactor 500 receive the control signal from the control part 156, and the regulating units regulate the switching operation of the switching valve 151 and the switching valve 152 and the operating conditions of the reactor 500. For the reactor 500, the regulating unit is constituted by, for example, a temperature regulator such as a heater which regulates temperature and a pressure controller which controls a pressure in the reactor 500.

According to the eighth arrangement, making it unnecessary to carry the catalyst between the carbon production part 12 and the catalyst regeneration part 13 presented by the first arrangement allows providing of a sequestration system having a simple, small-space, and low-cost configuration.

### (Ninth Arrangement)

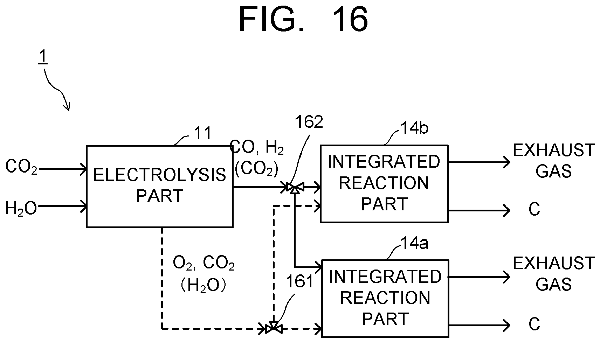

FIG. 16 is a schematic diagram illustrating a configuration example of a sequestration system of the ninth arrangement. The sequestration system illustrated in FIG. 16 includes an electrolysis part 11, an integrated reaction part 14a, an integrated reaction part 14b, a switching valve 161, and a switching valve 162. Hereinafter, a part different from that of the eighth arrangement will be described, and for the other parts, the description of the eighth arrangement can be referred to as required.

A configuration of each of the integrated reaction part 14a and the integrated reaction part 14b is the same as that of the integrated reaction part 14, and thus the description of the integrated reaction part 14 can be referred to as required. Note that the number of the integrated reaction parts 14 is not limited to the number illustrated in FIG. 16.

The switching valve 161 connects an anode discharge flow path 124 of the electrolysis part 11 and inlet ports 503 of respective reactors 500 of the integrated reaction part 14a and the integrated reaction part 14b.

The switching valve 162 connects a cathode discharge flow path 126 of the electrolysis part 11 and inlet ports 502 of the respective reactors 500 of the integrated reaction part 14a and the integrated reaction part 14b.

Hereinafter, the operation of the sequestration system of the ninth arrangement will be described.

First, the operation of the switching valve 161 and the switching valve 162 introduces a fluid flowing through the cathode discharge flow path 126 of the electrolysis part 11 to the reactor 500 of the integrated reaction part 14a, and does not introduce it to the reactor 500 of the integrated reaction part 14b. The reactor 500 of the integrated reaction part 14a is regulated to predetermined operating conditions, thereby carrying out a carbon production reaction in the reactor 500 of the integrated reaction part 14a. In this case, a fluid flowing through the anode discharge flow path 124 of an electrolysis cell 101 is introduced to the reactor 500 of the integrated reaction part 14b by the operation of the switching valve 161 and the switching valve 162, and is not introduced to the reactor 500 of the integrated reaction part 14a. The reactor 500 of the integrated reaction part 14b is regulated to predetermined operating conditions to carry out a catalyst regeneration reaction.

In a stage in which both the carbon production reaction in the reactor 500 of the integrated reaction part 14a and the catalyst regeneration reaction in the reactor 500 of the integrated reaction part 14b have ended, the operation of the switching valve 161 and the switching valve 162 introduces the fluid flowing through the cathode discharge flow path 126 to the reactor 500 of the integrated reaction part 14b without introducing it to the reactor 500 of the integrated reaction part 14a, and introduces the fluid flowing through the anode discharge flow path 124 to the reactor 500 of the integrated reaction part 14a without introducing it to the reactor 500 of the integrated reaction part 14b. In the reactor 500 of the integrated reaction part 14a, the operation conditions are regulated to carry out the catalyst regeneration reaction, and in the reactor 500 of the integrated reaction part 14b, the operation conditions are regulated to carry out the carbon production reaction.

Repeating the above operation causes alternate progress of the carbon production reaction and the catalyst regeneration reaction in the reactors 500, resulting in enabling continuous carbon sequestration. At the time of finally obtaining desired solid carbon in the integrated reaction part 14a and the integrated reaction part 14b, the solid carbon containing the catalyst is discharged from the reactors 500.

According to the ninth arrangement, providing a plurality of integrated reaction parts enables continuous and highly efficient material-use operation without exhausting the gases produced by the electrolysis part 11 outside the system.

### (Tenth, Eleventh Arrangements)

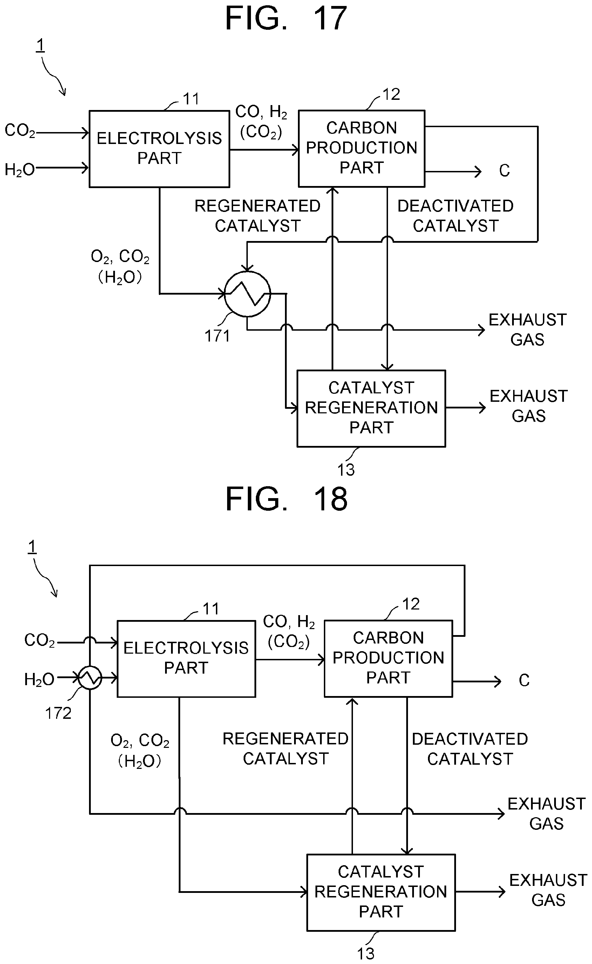

FIG. 17 is a schematic diagram illustrating a configuration example of a sequestration system of the tenth arrangement. FIG. 18 is a schematic diagram illustrating a configuration example of a sequestration system of the eleventh arrangement. Hereinafter, a part different from that of the first arrangement will be described, and for the other parts, the description of the first arrangement can be referred to as required.

The sequestration system of the tenth arrangement further includes at least one heat exchanger selected from the group consisting of a heat exchanger which exchanges heat between a carbon production part 12 and a catalyst regeneration part 13, a heat exchanger which exchanges heat between an electrolysis part 11 and the carbon production part 12, and a third heat exchanger which exchanges heat between the electrolysis part 11 and the catalyst regeneration part 13.

A sequestration system 1 illustrated in FIG. 17 is different in terms of having a heat exchanger 171 which exchanges heat between a fluid discharged from the carbon production part 12 and a fluid discharged from an anode discharge flow path 124 as compared with the sequestration system of the first arrangement.

A sequestration system 1 illustrated in FIG. 18 is different in terms of having a heat exchanger 172 which exchanges heat between a fluid discharged from a carbon production part 12 and water supplied to an anode flow path 113 of an electrolysis part 11 (for example, water in a humidifier 128) as compared with the sequestration system of the first arrangement.

The carbon production reaction is an exothermic reaction as represented by the above-described formulas (1), (2), (3), which allows heat generated by the carbon production part 12 to be effectively used in the system. For example, the heat can be used for heating the fluid discharged from the anode discharge flow path 124 and introduced to the catalyst regeneration part 13 as illustrated in FIG. 17, or used for heating the water introduced to the electrolysis part 11 as illustrated in FIG. 18. This allows improvement in energy efficiency of the system, which enables providing of a highly efficient sequestration system.

As represented by the above-described formulas (6), (7), (8), (9), the reaction in the catalyst regeneration part 13 changes to the exothermic reaction or an endothermic reaction depending on the kind and composition of the source gas. Under conditions of the exothermic reaction in the catalyst regeneration part 13, using the heat exchange also allows the heat generated by a catalyst regeneration reactor 131 to be used for the carbon production reaction caused by the carbon production part 12 and heating of the raw material introduced to the electrolysis part 11.

Depending on the kind and composition of raw material for the catalyst regeneration part 13, using the characteristic of allowing optional regulation of heat generation and heat absorption also allows maximum energy efficiency of the overall system. For example, making the catalyst regeneration reaction into the endothermic reaction by selectively introducing CO₂ or H₂O in the fluid discharged from the anode discharge flow path 124 to the catalyst regeneration part 13 allows, owing to the exothermic reaction of the carbon production reaction, a configuration of a highly energy-efficient system while providing such a configuration as illustrated in FIG. 17. From this viewpoint, using, for an electrolysis cell 101, a porous diaphragm electrolysis cell or a solid polymer electrolyte cell likely to contain CO₂ as an anode produced gas can be said to be advantage to high efficiency of the overall system.

### (Twelfth Arrangement)

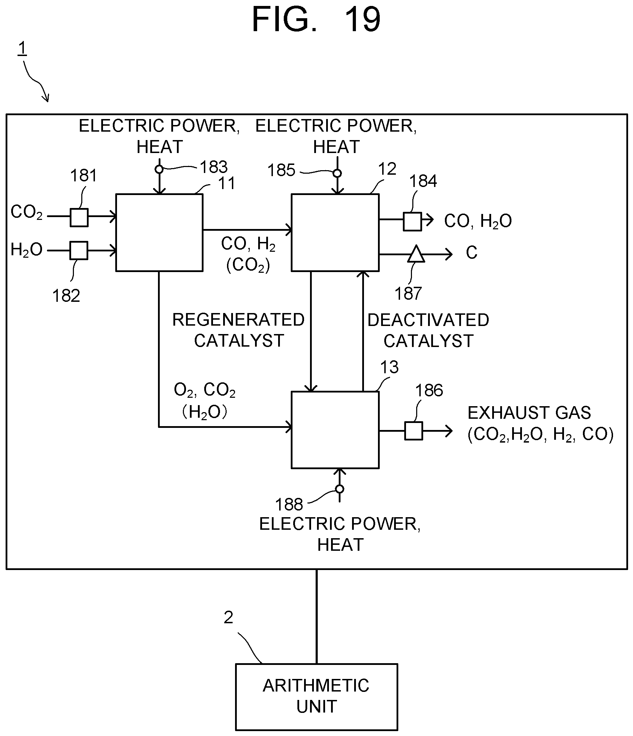

FIG. 19 is a schematic diagram illustrating a configuration example of a sequestration system of the twelfth arrangement. The sequestration system illustrated in FIG. 19 is different in terms of having a measuring part 181, a measuring part 182, a measuring part 183, a measuring part 184, a measuring part 185, a measuring part 186, and a measuring part 187 as compared with the sequestration system of the first arrangement. Note that the sequestration system of the twelfth arrangement may have at least one measuring instrument of the measuring part 181, the measuring part 182, the measuring part 183, the measuring part 184, the measuring part 185, the measuring part 186, and the measuring part 187. Hereinafter, a part different from that of the first arrangement will be described, and for the other parts, the description of the first arrangement can be referred to as required.

The measuring part 181 can measure an inflow of a cathode gas such as carbon dioxide introduced to an electrolysis part 11. The measuring part 181 is connected to an inlet port of a cathode flow path 115, for example.

The measuring part 182 can measure an inflow of an anode solution such as water introduced to the electrolysis part 11. The measuring part 182 is connected to an inlet port of an anode flow path 113, for example.

The measuring part 183 can measure amounts of energy sources such as electric power, heat quantity, and fuel supplied to the electrolysis part 11, for example.

The measuring part 184 can measure an outflow of a fluid discharged from a carbon production part 12. The measuring part 184 is connected to an outlet port 204 of a carbon production reactor 122 illustrated in FIG. 3, for example.

The measuring part 185 can measure amounts of energy sources such as electric power, heat quantity, and fuel supplied to the carbon production part 12, for example.

The measuring part 186 can measure an outflow of a fluid discharged from a catalyst regeneration part 13. The measuring part 186 is connected to an outlet port 303 of a catalyst regeneration reactor 131 illustrated in FIG. 4, for example.

The measuring part 187 can measure an outflow of solid carbon discharged from the carbon production part 12. The measuring part 187 is connected to an outlet port 206 of the carbon production reactor 122 illustrated in FIG. 3, for example.

Substances and energy flowing out of the electrolysis part 11 are a fluid discharged from the cathode flow path 115, a fluid discharged from the anode flow path 113, and an amount of heat generated in an electrolysis cell 101 by an electrolytic reaction. Further, objects to be measured may also include consumables such as cell members and an electrolysis solution which are periodically replaced.

Also in the carbon production part 12 and the catalyst regeneration part 13 similarly to the electrolysis part 11, amounts of substances to be introduced and discharged and energy are measured. The amounts of the substances to be introduced and the energy are amounts of, for example, source gases supplied from the electrolysis part 11 and the outside, a catalyst carried in from the catalyst regeneration part 13 and the outside, and electric power, heat, and fuel for the operation. Further, the substances to be discharged are, for example, an exhaust gas exhausted by the reaction, the catalyst discharged to the catalyst regeneration part 13 and the outside, and heat quantity generated by the reaction.

Examples of the measuring instruments which measure the amounts of the substances include a concentration meter, a flowmeter, a mass meter, and the like. Examples of the measuring instruments which measure the amount of the energy include a wattmeter, an ammeter, a voltmeter, a thermometer, the flowmeter, and the like.

Measured data of the amount of the substance and the amount of the energy measured by each of the measuring parts is transmitted to an arithmetic unit 2 such as, for example, a personal computer. A sequestration system 1 may include the arithmetic unit 2. The arithmetic unit 2 calculates CO₂ emissions in the system. A formula of arithmetic processing is not particularly limited, and for example, the CO₂ emissions are calculated by using the following formula (11).

CO₂ emissions = ΣM_{OUT, i} × Xᵢ, CO₂ - ΣM_{IN, j} × Xⱼ, COz (11)

M_{OUT, i} represents an amount of a component i (amount of substance, or energy) flowing out of each of the measuring parts. Xi, COz represents CO₂ emissions intensity of the component i (substance or energy). M_{IN, j} represents an amount of a component j (substance or energy) flowing in from each of the measuring parts. Xⱼ, CO₂ is CO₂ emissions intensity of the component j (substance or energy).

According to the twelfth arrangement, using the measuring instrument and the arithmetic unit allows quantification of CO₂ emissions of the system, which enables practical use for service such as CO₂ emissions trading.

Note that the respective arrangements can be appropriately combined.

While certain arrangements of the present invention have been described above, these arrangements have been presented by way of example only, and are not intended to limit the scope of the inventions. Indeed, the novel arrangements described herein may be embodied in a variety of other forms; furthermore, various omissions, substitutions, and changes in the form of the arrangements described herein may be made without departing from the spirit of the inventions. The accompanying claims and their equivalents are intended to cover such forms or modifications as would fall within the scope and spirit of the invention.

The above-described arrangements can be summarized into the following clauses.

### (Clause 1)

A sequestration system comprising:
an electrolysis part having an electrolysis cell comprising an anode, a cathode, an anode flow path facing on the anode, and a cathode flow path facing on the cathode; and
a reaction part configured to switch a first operation and a second operation, the first operation comprising producing solid carbon using a catalyst from a first raw material containing a first fluid to be introduced from the cathode flow path, and the second operation comprising performing a reaction of a second raw material and solid carbon to be deposited on the catalyst to remove at least a part of the deposited solid carbon from the catalyst, the second raw material containing a second fluid to be introduced from the anode flow path.

### (Clause 2)

A sequestration system comprising:
an electrolysis part comprising an electrolysis cell having an anode, a cathode, an anode flow path facing on the anode, and a cathode flow path facing on the cathode;
a carbon production part connected to an outlet of the cathode flow path, and comprising a first reactor configured to produce solid carbon from a raw material using a catalyst, the raw material including a first fluid to be introduced from the cathode flow path; and
a catalyst regeneration part connected to an outlet of the anode flow path and connected to the carbon production part, and comprising a second reactor configured to perform a reaction of at least one substance contained in a second fluid to be introduced from the anode flow path and solid carbon to be deposited on the catalyst to be introduced from the carbon production part to remove at least a part of the deposited solid carbon from the catalyst.

### (Clause 3)

A sequestration system comprising:
an electrolysis part having an electrolysis cell comprising an anode, a cathode, an anode flow path facing on the anode, and a cathode flow path facing on the cathode;
a reaction part comprising a third reactor configured to switch a first operation and a second operation, the first operation comprising producing solid carbon from a raw material using a catalyst, the raw material including a first fluid to be introduced from the cathode flow path, and the second operation comprising performing a reaction of at least one substance contained in a second fluid to be introduced from the anode flow path and solid carbon to be deposited on the catalyst to remove at least a part of the deposited solid carbon from the catalyst;
a first switching valve connecting an outlet of the cathode flow path and the third reactor; and
a second switching valve connecting an outlet of the anode flow path and the third reactor.

### (Clause 4)

The sequestration system according to the clause 1, the clause 2, or the clause 3, wherein the first fluid contains carbon dioxide.

### (Clause 5)

The sequestration system according to the clause 2 or the clause 3, wherein the raw material contains carbon dioxide, and
wherein at least a part of the carbon dioxide is derived from the atmosphere and derived from biomass.

### (Clause 6)

The sequestration system according to any one of the clause 1 to the clause 5, wherein the first fluid contains a reduction product to be produced by reducing carbon dioxide flowing through the cathode flow path by the cathode.

### (Clause 7)

The sequestration system according to the clause 2, further comprising a carbon dioxide supply source configured to introduce a gas containing carbon dioxide to the carbon production part.

### (Clause 8)

The sequestration system according to any one of the clause 1 to the clause 7, wherein the electrolysis cell is a carbon dioxide electrolysis cell.

### (Clause 9)

The sequestration system according to any one of the clause 1 to the clause 7, wherein the electrolysis cell is a water electrolysis cell.

### (Clause 10)

The sequestration system according to the clause 2, further comprising a gas conversion part provided between the electrolysis part and the carbon production part, the gas conversion part being configured to perform a reverse shift reaction of carbon dioxide and hydrogen to produce carbon monoxide and water.

### (Clause 11)

The sequestration system according to the clause 2, further comprising a first flow path connecting the carbon production part and the electrolysis part, the first flow path being configured to introduce at least a part of a third fluid to be discharged from the carbon production part to the electrolysis part.

### (Clause 12)

The sequestration system according to the clause 2, further comprising a second flow path connecting the carbon production part and the catalyst regeneration part, the second flow path being configured to introduce at least a part of a third fluid to be discharged from the carbon production part to the catalyst regeneration part.

### (Clause 13)

The sequestration system according to the clause 2, further comprising a third flow path connecting the electrolysis part and the catalyst regeneration part, the third flow path being configured to introduce at least a part of a fourth fluid to be discharged from the catalyst regeneration part to the electrolysis part.

### (Clause 14)

The sequestration system according to the clause 2, further comprising a fourth flow path connecting the carbon production part and the catalyst regeneration part, the fourth flow path being configured to introduce at least a part of a fourth fluid to be discharged from the catalyst regeneration part to the carbon production part.

### (Clause 15)

The sequestration system according to the clause 3, comprising a plurality of the reactors.

### (Clause 16)

The sequestration system according to the clause 2, further comprising a gas concentration meter provided at an outlet of at least one reactor selected from the group consisting of the first reactor and the second reactor.

### (Clause 17)

The sequestration system according to the clause 2, further comprising a weight meter configured to measure a weight of the first reactor or the second reactor.

### (Clause 18)

The sequestration system according to the clause 2, further comprising at least one heat exchanger selected from the group consisting of a first heat exchanger configured to exchange heat between the carbon production part and the catalyst regeneration part, a second heat exchanger configured to exchange heat between the electrolysis part and the carbon production part, and a third heat exchanger configured to exchange heat between the electrolysis part and the catalyst regeneration part

### (Clause 19)

The sequestration system according to the clause 2, further comprising:
a measuring instrument configured to measure an amount of a substance and an amount of energy to be introduced to the sequestration system; and
an arithmetic unit configured to calculate carbon dioxide emissions of the overall sequestration system from a measured value of the measuring instrument.

## Claims

1. A sequestration system comprising:
an electrolysis part having an electrolysis cell comprising an anode, a cathode, an anode flow path facing on the anode, and a cathode flow path facing on the cathode; and
a reaction part configured to switch a first operation and a second operation, the first operation comprising producing solid carbon using a catalyst from a first raw material containing a first fluid to be introduced from the cathode flow path, and the second operation comprising performing a reaction of a second raw material and solid carbon to be deposited on the catalyst to remove at least a part of the deposited solid carbon from the catalyst, the second raw material containing a second fluid to be introduced from the anode flow path.

2. The sequestration system according to claim 1, wherein the reaction part comprises:
a carbon production part connected to an outlet of the cathode flow path, and comprising a first reactor configured to produce the solid carbon from the first raw material using the catalyst; and
a catalyst regeneration part connected to an outlet of the anode flow path and connected to the carbon production part, and comprising a second reactor configured to perform a reaction of at least one substance contained in the second fluid and the deposited solid carbon to remove at least a part of the deposited solid carbon from the catalyst.

3. The sequestration system according to claim 1, wherein the reaction part comprises a third reactor configured to switch the first operation and the second operation, the second operation comprising performing a reaction of at least one substance contained in the second fluid and the deposited solid carbon to remove at least a part of the deposited solid carbon from the catalyst,
the sequestration system further comprises:
a first switching valve connecting an outlet of the cathode flow path and the third reactor; and
a second switching valve connecting an outlet of the anode flow path and the third reactor.

4. The sequestration system according to claim 1, claim 2, or claim 3, wherein the first fluid contains a reduction product to be produced by reducing carbon dioxide flowing through the cathode flow path by the cathode.

5. The sequestration system according to claim 2, further comprising a carbon dioxide supply source configured to introduce a gas containing carbon dioxide to the carbon production part.

6. The sequestration system according to claim 2, further comprising a gas conversion part provided between the electrolysis part and the carbon production part, the gas conversion part being configured to perform a reverse shift reaction of carbon dioxide and hydrogen to produce carbon monoxide and water.

7. The sequestration system according to claim 2, further comprising a first flow path connecting the carbon production part and the electrolysis part, the first flow path being configured to introduce at least a part of a third fluid to be discharged from the carbon production part to the electrolysis part.

8. The sequestration system according to claim 2, further comprising a second flow path connecting the carbon production part and the catalyst regeneration part, the second flow path being configured to introduce at least a part of a third fluid to be discharged from the carbon production part to the catalyst regeneration part.

9. The sequestration system according to claim 2, further comprising a third flow path connecting the electrolysis part and the catalyst regeneration part, the third flow path being configured to introduce at least a part of a fourth fluid to be discharged from the catalyst regeneration part to the electrolysis part.

10. The sequestration system according to claim 2, further comprising a fourth flow path connecting the carbon production part and the catalyst regeneration part, the fourth flow path being configured to introduce at least a part of a fourth fluid to be discharged from the catalyst regeneration part to the carbon production part.

11. The sequestration system according to claim 3, comprising a plurality of the reactors.

12. The sequestration system according to claim 2, further comprising a gas concentration meter provided at an outlet of at least one reactor selected from the group consisting of the first reactor and the second reactor.

13. The sequestration system according to claim 2, further comprising a weight meter configured to measure a weight of the first reactor or the second reactor.

14. The sequestration system according to claim 2, further comprising at least one heat exchanger selected from the group consisting of a first heat exchanger configured to exchange heat between the carbon production part and the catalyst regeneration part, a second heat exchanger configured to exchange heat between the electrolysis part and the carbon production part, and a third heat exchanger configured to exchange heat between the electrolysis part and the catalyst regeneration part.

15. The sequestration system according to claim 2, further comprising:
a measuring instrument configured to measure an amount of a substance and an amount of energy to be introduced to the sequestration system; and
an arithmetic unit configured to calculate carbon dioxide emissions of the overall sequestration system from a measured value of the measuring instrument.
